Europäisches Patentamt

(19) European Patent Office

Office européen des brevets

(11) Publication number: **0 235 405**
B1

# (12) EUROPEAN PATENT SPECIFICATION

(45) Date of publication of the patent specification:
26.04.89

(21) Application number: 86202198.7

(22) Date of filing: 05.12.86

(51) Int. Cl.⁴: **B65D 45/34,** B65D 45/30, F16L 23/04

(54) Clamping or tensioning ring for fastening a lid on a container.

(30) Priority: 12.12.85 NL 8503429

(43) Date of publication of application:
09.09.87 Bulletin 87/37

(45) Publication of the grant of the patent:
26.04.89 Bulletin 89/17

(84) Designated Contracting States:
BE DE FR GB NL SE

(56) References cited:
EP-A- 0 088 227
DE-A- 3 432 463
DE-B- 1 011 762

(73) Proprietor: KONINKLIJKE EMBALLAGE INDUSTRIE VAN LEER B.V., Amsterdamseweg 206, NL-1182 HL Amstelveen(NL)

(72) Inventor: Braakman, Gerleen Henri, Van Lenneplaan 86, NL-3768 XL Soest(NL)

(74) Representative: van der Beek, George Frans et al, Nederlandsch Octrooibureau Johan de Wittlaan 15 P.O. Box 29720, NL-2502 LS The Hague(NL)

## Description

The invention relates to a clamping or tensioning ring for detachably fastening a lid on the open end of a container body, said ring consisting of a piece of sectional material which has a U- or V-shaped section and is bent substantially in a practically closed circular arc with its two ends facing one another, and which is provided with a tensioning and closing mechanism consisting of a tensioning arm, which is hingedly fastened near one end of the ring, and of a connecting member which is hingedly fastened at one end to the other end of the ring and at its other end to the tensioning arm at a point situated between the ends of the latter in such a manner that when the tensioning arm is placed against the ring said ring forms a circle, while the connecting member forms a bridge over the ends of the ring.

Many forms of clamping or tensioning rings of this kind are widely known. In these different types the connecting member consists of links or a bent wire loop. It is also known for this connecting member to be made in one piece provided at its ends with lips having openings for hinge pins. The hinges are usually composed of pins inserted into lips forming part of a member which is spot welded to the base of the ends of the ring. It is known for the tensioning arm to be given a U-shaped section, which however lies with clearance against the outer surface of the ring. On the side where the tensioning arm comes to lie, the welded part often has in addition a fitting in the form of a bow where the tensioning arm passes across, the tensioning arm being provided with an opening to permit the passage through it, and through the bow, of a closure means, such as a closure wire.

All known clamping or tensioning rings have the shortcoming that they consist of a fairly large number of components which project a relatively great distance outwards and at the site of the tensioning ring give a different moment of resistance, so that at the site of the tensioning bow the ring behaves differently under shock or bending loads, usually with greater rigidity than the other parts of the ring. In the case of radial loading, occurring when a container is dropped, this may have detrimental consequences.

If parts project excessively, this may in addition result in the closure means becoming caught, damaged, or even opened.

If a gap exists at the point where the ends of the rig are pulled towards each other, these ends may make an uncontrolled movement relative to one another if the container is deformed, for example under radial load resulting from a fall. This may have detrimental consequences.

The invention now seeks to provide a clamping or tensioning ring which modifies the moment of resistance at the site of the closure means as little as possible, and which bridges over the gap between the ends of the ring which are pulled towards each other. In addition, the invention seeks to provide a tensioning ring which consists of the fewest possible parts and which projects outwards to the least possible extent.

According to the invention this aim is achieved firstly in that the connecting member, with the exception of the parts forming the hinges, has a cross-sectional profile which fits accurately over the outside surface of the profile of the ring, particularly at the site of the facing ends of the ring, and that the tensioning arm has, between the hinge connection to the connecting member and the free end, a cross-sectional profile which, at least over part of the length of the tensioning arm, fits with its legs accurately over the legs of the profile of the ring, and that the profiles of the tensioning arm and of the connecting member complement one another in the region between the hinges of the arm.

At the point where the gap exists between the ends of the ring which are drawn together by the tensioning arm and the connecting member - a gap which can never be entirely eliminated but must be as small as possible, the gap is bridged over because the profile of the connecting member fits over it accurately. In addition, the tensioning arm also has a profile making the closest possible connection, so that it is ensured that the tensioning arm will project radially as little as possible and thus will not easily become caught. At the point where in the closed position the connecting member and the tensioning arm come to lie in line, the opening in the profile of the connecting member adjoins the leg of the tensioning arm laid therebetween.

In order further to intensify the bridging action, according to the invention it is possible for the side walls of the ring to be extended outwards on both sides of an opening provided therein and to form side cheeks which in the closed position lie against the side walls of the tensioning arm. The tensioning arm is thus enclosed in the transverse direction.

This can be still further improved if in the closed position the outwardly extended side cheeks of the ring lie between the tensioning arm and the side cheeks of the connecting member.

It is in addition possible to provide a mechanical connection in the longitudinal direction of the closure by providing both the outwardly extended side cheeks at one end with a cutout in which the hinge pin between the tensioning arm and the connecting member can engage.

In this way the tensioning arm is only used as the means of closing and opening the tensioning and closure mechanism.

In the closed state the tensioning arm thus no longer serves to transmit a (compressive) force from the hinge point between the tensioning arm and the tensioning ring and the hinge point between tensioning arm and the connecting member.

It is thus made possible for the tensioning arm to be made of plastics material. This in turn opens up the possibility of giving this tensioning arm of plastics material an inwardly projecting rim which can form a snap connection cooperating with a rim on an opening in the ring.

Furthermore, it is then also possible to provide the tensioning arm with a flexible strip integral with it and adapted to pass non-extractably through aligned openings in the tensioning arm, the side walls of the ring, and/or the side cheeks of the connecting member.

This flexible strip, which can be produced at the same time as the tensioning arm by an injection moulding process, thus not only forms a very economical method of sealing the closure mechanism, but also has an important incidental property, which with existing sealing systems cannot be achieved or can be achieved only with much greater difficulty: in order to open the closure mechanism after it has been sealed, the flexible strip must be cut through or the barbs must be torn off.

In order to keep radial dimensions as small as possible and thus to affect the moment of resistance as little as possible, according to the invention the hinge axes of the connections of the tensioning arm to the ring and of the connecting member to the ring may lie in the plane of the base of the profile of the ring. In comparison with hinge bows attached by welding, this has the advantage that the radial dimensions are considerably smaller. The hinge axis of the connection of the tensioning arm to the connecting member may also according to the invention lie in the plane of the base of the profile of the connecting member, so that there again as little space as possible is required.

A similar positioning of the hinge can be achieved if according to the invention a hinge consists of a lip punched out on three sides at the site of an opening punched in the base of the profile of the ring or of the tensioning arm respectively, said lip being folded over inwardly around a hinge pin formed by punching out and pressing to shape in the end of the tensioning arm or the ends of the connecting member respectively. Not only are hinges which do not project outwards thus obtained in the desired manner, but in addition the effect is achieved that the construction of the closure means now consists solely of the connecting member and the tensioning arm. The entire closure mechanism thus now consists solely of two parts.

It may be observed that from British Patent Specification No. 932, 188 a tensioning ring is known which has a closure mechanism consisting of a tensioning arm whose inner end lies against the outer edge of one end of the ring and in another place is fastened to a flexible strip whose other end forms part of the opposite end of the tensioning ring. It is true that this construction also consists solely of two parts, but it is not able to take any substantial loads, particularly because at the site of the gap between the ends of the ring there is no support of any kind.

According to the invention the previously described construction of the hinge can be obtained by bending up the edges of the openings of the punched-out lip, near said lip, at right angles to the hinge axis and providing them with an indented semicircular cavity, the axis of which coincides with the hinge axis. A hinge pin can then fit therein, this pin being formed by bending up in U-shape the end edge of the arm or the connecting member respectively and the adjacent edge, extending parallel thereto, of the opening punched in the arm or connecting member respectively.

In this way it is possible to obtain a closure mechanism which gives the tensioning ring the required rigidity, but not excessive rigidity, which projects only slightly in the outward direction, and which can be produced in a very simple manner by a number of pressing and punching operations.

Locking can be achieved in that the ends of the ring have at the base a lip punched out of the latter and bent outwards, while the connecting member has an opening which fittingly falls over the lips in the closed position of the ring.

After the ring has been closed, these lips are bent back flat, so that security is achieved.

Another way of effecting closing consists in providing the ring with a flange which near the ends has lips punched out and bent outwards, while the connecting member has a flange which in the close position lies against the flange on the ring and has an opening which falls over the lips.

Another way of obtaining the hinge connection may according to the invention consist in that the hinge pin of one or more of the hinge fastenings of the tensioning arm to the ring, of the connecting member to the ring, or of the connecting member and the tensioning arm is or are held in place by means of a U-shaped bow which is placed with its legs astride the pin and whose legs, inserted through an opening on each side of the pin, are folded flat in opposite directions against the inner wall of the part which is to be connected to the hinge pin.

According to the invention the tensioning arm may be made in the form of a box section, either of plastics material or of metal, for example consisting of two U-sections disposed one in the other. A section of this kind has a high moment of resistance and requires little material.

The invention will now be described in greater detail with reference to the drawings.

Figure 1 shows in perspective a part of a tensioning ring with a closure mechanism according to the invention, in the open position.

Figure 2 shows the mechanism of Figure 1 in the closed position.

Figures 3 and 4 show in perspective parts of a hinge construction according to the invention.

Figure 5 is a section of the assembled construction.

Figure 6 shows in perspective another construction of a ring according to the invention, in the open position.

Figure 7 shows the ring of Figure 6 in the closed position.

Figure 8 shows a variant of the ring shown in Figure 7.

Figure 9 shows schematically a further improvement of the tensioning ring according to the invention.

Figure 10 shows, in a section in a plane through the ring, a form of construction of the tensioning ring according to the invention, in which the tensioning arm is made of plastics material.

Figure 11 is a section on the line XI–XI in Figure 10.

Figure 12 is a section on the line XII–XII in Figure 10.

Figure 13 is a side view of another form of construction of the tensioning ring according to the invention.

Figure 14 is a section on the line XIV–XIV in Figure 13.

Figure 15 is a section on the line XV–XV in Figure 13.

Figure 16 is a section on the line XVI–XVI in Figure 13.

Figure 17 is a section on the line XVII–XVII in Figure 13.

Figure 18 is a section on the line XVIII–XVIII in Figure 13.

Figure 19 shows in perspective a tensioning ring according to the invention, which is provided with tamperproof protection.

Figure 20 is a section through a variant.

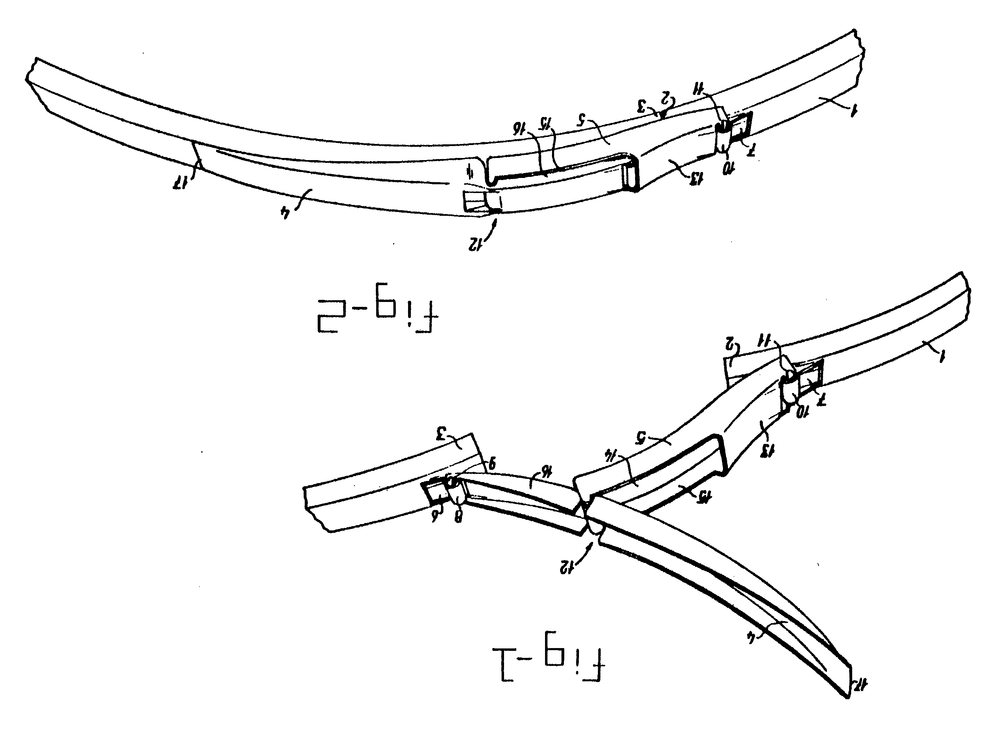

The tensioning ring 1 shown in Figures 1 and 2 has ends 2 and 3 respectively, which in the open position shown in Figure 1 lie so far apart that a ring of this kind can be placed around the rim of a lid and the bead on the body of a container, when said rim and said bead lie one over the other. The closure mechanism shown in Figure 1 consists of a tensioning arm 4 and a connecting member 5.

The tensioning ring has a U-shaped profile in section.

Openings 6 and 7 are punched in the ends of the tensioning ring, leaving free a lip 8, which is bent over inwards around a hinge pin 9. In the case of the opening 7, the lip is designated 10 and the hinge pin 11. The hinge pins are integral with the arm and the connecting member 5 respectively. At 12 a hinge is provided in the connection between the connecting member 5 and the arm 4, and is of similar construction.

The connecting member 5 has in its portion 13 a profile which in the closed position, as shown in Figure 2, fits accurately over the profile of the respective ends 2 and 3 of the ring.

At the end where the hinge 12 is provided the base of the connecting membere has an opening 14, which is so shaped that its side edges 15 lie against the edges 16 of the tensioning arm. The tensioning arm itself has in its portion between the hinge 12 and the end 17 a profile such that its side legs lie against the sides of the U-shaped profile of the ring 1. This can be seen on the right in Figure 2.

Figures 3, 4 and 5 show in greater detail the construction of one possible hinge. Figure 3 shows that a lip 10 is punched out of the end 2 of the tensioning ring 1 and is bent outwards, and that the edges of the opening 7 are bent up at 18 and 18' respectively, thus forming a space to enable semicylindrical openings 20, 21 to be pressed therein to receive the hinge pin.

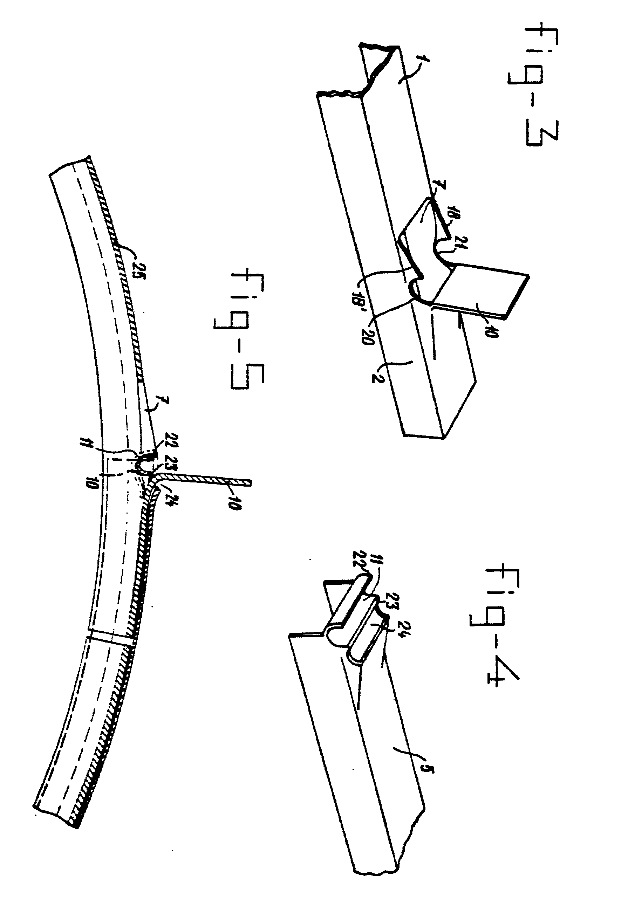

Figure 4 shows a substantially U-shaped hinge pin 11, which is obtained by bending outwards the end edge 22 of the base of the connecting member 5 and likewise bending outwards the end edge 23 formed by punching out the opening 24, thus producing the U-shaped profile 11 which is shown in Figures 4 and 5 and which has the legs 22 and 23.

When the lip 10 is then folded around the hinge pin 11, after the latter has been placed in the indentations 20 and 21, as indicated in broken lines in Figure 5, the hinge is formed. Figure 5 shows that the axis of this hinge lies in the plane of the base 25 of the profile.

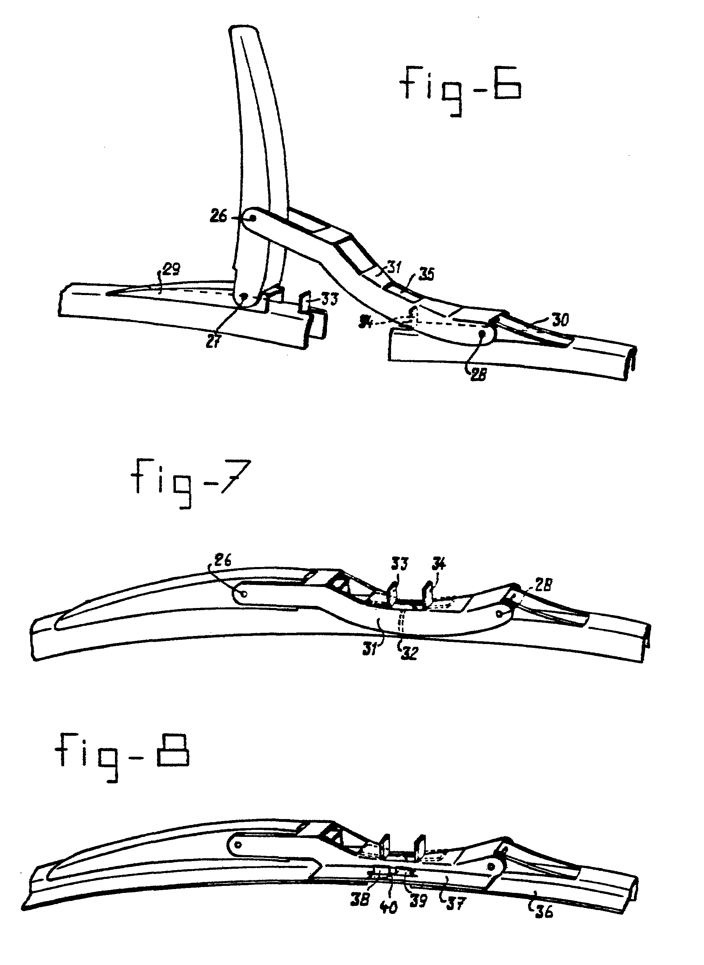

Figures 6 and 7 show an embodiment in the open and closed positions respectively, which differs less from the known closure mechanism than the embodiment shown in Figures 1 and 2, since use is still made of hinge pins 26, 27 and 28, together with hinge parts 29 and 30 fastened on the ends.

However, this embodiment has a portion 31 of the connecting member which, in the closed position shown in Figure 7, fits accurately over the profile of the ring and thus offers support for the ends at the gap.

In this embodiment also the profiles of the tensioning arm and connecting member can meet, and the profile of the tensioning arm can lie with its legs against the side surfaces of the profile of the ring. This embodiment, however, is less advantageous, since more parts are used and more space is required in the radial outward direction.

Figures 6 and 7 also show a securing means, which can be used not only in the embodiment shown in those Figures but also in that shown in Figures 1 and 2. This securing means consists of lips 33, 34, which are punched out of the end edges of the ring and bent over outwards. The connecting member has an opening 35 which drops over these lips in the closed position. If these lips are then folded over, as shown in broken lines in Figure 7, the connection is secured.

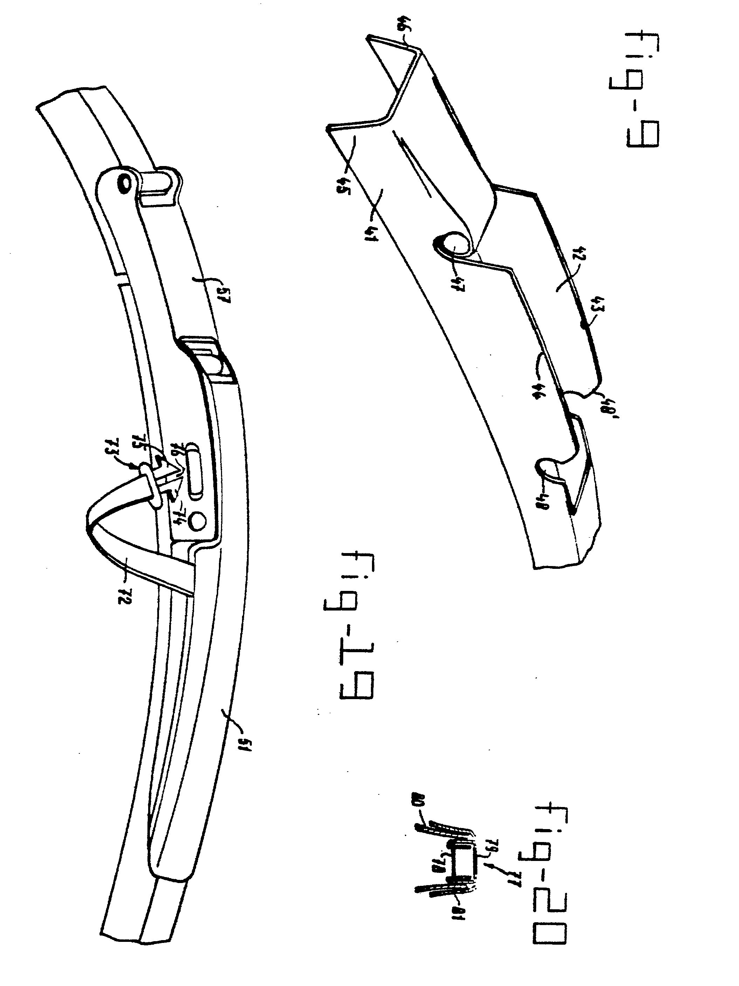

Figure 8 shows another securing means. In this case the ring is provided with a flange 36, and the connecting member is likewise provided with a flange 37, which lies against the flange 36. The flange 36 has lips 38, 39 which are bent up from the edge and which are adapted to pass through a slot 40 in the flange 37. When they are bent over as shown in broken lines, security can once again be provided.

Figure 9 shows a tensioning ring end 41, in which an opening 42 is formed by punching out and bending, said opening having side cheeks 43 and 44 which project outwards and which, when bent over, lie in line with the wide walls 45, 46 of the ring. At 47 is indicated the site for the hinge connection of the tensioning arm to the ring, and at 48 is indicated the site where the hinge between the tensioning arm and the connecting member will come to lie. This site may have a shape such that the hinge pin will in the closed state be locked fast, as indicated by the rounded portion 48', which enables a hinge pin to be engaged in the openings 48. In the closed position the tensioning arm will then lie with its side walls between the side cheeks 43, 44 and thus be enclosed in the transverse direction.

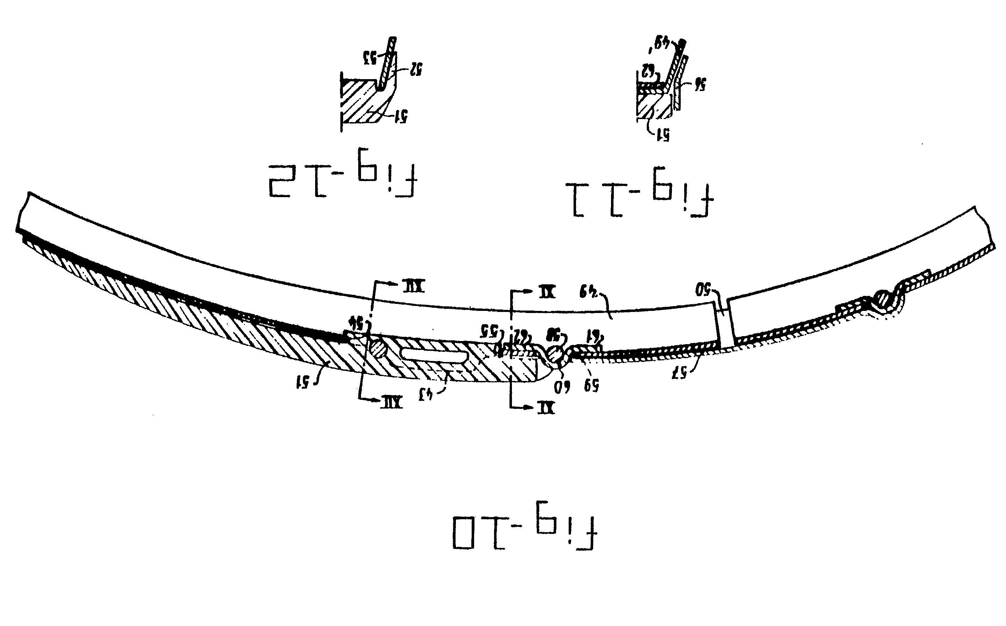

Figure 10 shows an embodiment having a ring 49 which in the closed position has a gap 50 between its ends and which is provided, in the same way as in the case illustrated in Figure 9, with an opening having side cheeks 43, 44. In this embodiment the tensioning arm 51 is made of plastics material. This tensioning arm 51 has side walls 52, which lie against the side walls 53 of the ring 49, as shown in Figure 12, which is a section at the site of an opening in the base of the tensioning ring 49; in the section shown in Figure 10 this opening is bounded by the edges 54 and 55.

The section shown in Figure 11 allows it to be seen that the tensioning arm 51 is enclosed in the transverse direction between the extended side cheeks 56, bent over outwards, of the connecting member 57, which engage over and lie against the side walls 49' of the ring 49.

The hinge connection is here formed by enclosing the hinge pin 58 of the tensioning arm 51 in an opening 59 in the ring 49 by means of a U-shaped bow 60, whose legs 61 and 62 are bent over in opposite directions and lie against the inside surface of the ring 49, as can also be seen in the section in Figure 11.

Figures 13 to 18 show a connection of the kind in question in side view and in part in section. Figure 14 allows it to be seen that the tensioning arm 63 lies against the outside surface of the ring 64 and has a projecting rim 65 which is useful for handling the closure means, particularly for detachment purposes.

The hinge connections may be the same as that shown in Figure 15.

Figure 15 shows the hinge connection between the tensioning arm and the connecting member 66, comprising a pin 67 which passes through a bore in the arm 63 and through openings in the side cheeks 66' of the connecting member. These side cheeks 66' of the connecting member 66 effect enclosure in the transverse direction, exactly like the side cheeks 43, 44 shown in Figure 9. Between the hinge 68 connecting the tensioning arm 63 to the ring 64 the connecting member 66 has a profile which exactly fits over the outer surface of the profile of the ring 64.

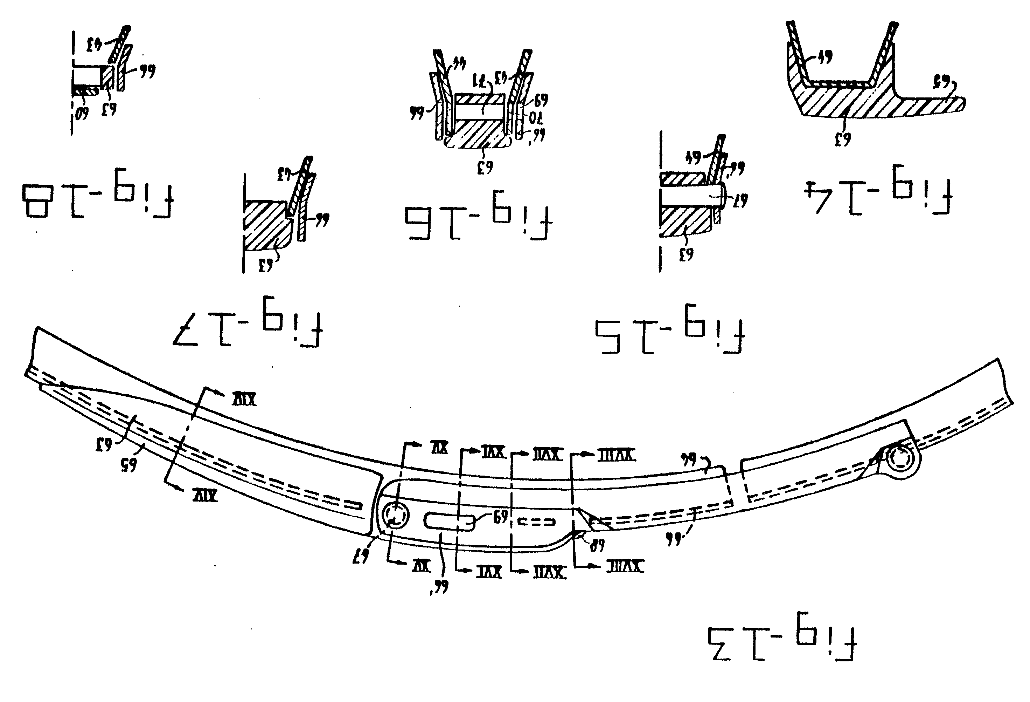

Figure 16 enables it to be seen that the tensioning arm 63, the side cheeks 43, 44 of the ring, which are bent outwards in the manner illustrated in Figure 9, and the outwardly directed side cheeks 66' of the connecting member are provided with through openings 69, 70 and 71 for the attachment of a securing means.

Figure 19 shows in perspective the tensioning ring shown in essence in Figures 10 to 18, and enables it to be seen that the tensioning arm 51, which is made of plastics material, is provided with a strip 72 which is integral with it and which is provided with a locking end adapted to be inserted into the openings 69 to 71 and has barb-like parts 74, 75, between which a slit is provided and which permit insertion but prevent extraction. When it is inserted, this strip prevents the opening of the closure means unless sufficient force is applied to enable the parts 74 and 75 to be torn off, which of course can then immediately be seen.

Figure 20 shows a section through another embodiment, which differs from the previous embodiment in that the tensioning arm 77 consists of a box section formed by two U-shaped sections 78, 79 fitting one into the other.

Exactly like Figure 16, Figure 20 shows the confinement of the side cheeks 80 of the ring between the tensioning arm 77 and the side cheeks 81 of the connecting member.

## Claims

1. Clamping or tensioning ring (1, 64) for detachably fastening a lid on the open end of a container body, said ring consisting of a piece of sectional material which has a U-shaped or V-shaped section and is bent substantially in a practically closed circular arc with its two ends facing one another, and which is provided with a tensioning and closing mechanism consisting of a tensioning arm (4), which is hingedly fastened near one end (3) of the ring (1, 64), and of a connecting member (5) which is hingedly fastened at one end to the other end (2) of the ring (1, 64) and at its other end to the tensioning arm (4) at a point situated between the ends of the latter, in such a manner that when the tensioning arm (4) is placed against the ring (1, 64) said ring (1, 64) forms a circle, while the connecting member (5) forms a bridge over the ends (2, 3) of the ring (1, 64), characterized in that the connecting member (5), with the exception of the parts forming the hinges (11, 12), has a cross-sectional profile which fits accurately over the outside surface of the profile of the ring, particularly at the site of connection of the ends (2, 3) of the ring (1, 64) to one another, and that the tensioning arm (4) has, between the hinge connection (12) to the connecting member (5) and the free end (17), a cross-sectional profile which, at least over part of the length of the tensioning arm (4), fits with its legs accurately over the legs of the profile of the ring (1, 64), and that the profiles of the tensioning arm (4) and of the connecting member (5) complement one another in the region between the hinges (9, 12) of the arm (4).

2. Clamping or tensioning ring according to claim 1, characterized in that the side walls of the ring are extended outwards on both sides of an opening provided therein and form side cheeks (43, 44) which in the closed position lie against the side walls of the tensioning arm (4, 63).

3. Clamping or tensioning ring according to claim 2, characterized in that the closed position the outwardly extended side cheeks (43, 44) of the ring lie between the tensioning arm (51, 63) and the side cheeks (56) of the connecting member (57, 66).

4. Clamping or tensioning ring according to claim 1, 2 or 3, characterized in that the tensioning arm (51, 63) is made of plastic material.

5. Clamping or tensioning ring according to claim 4, characterized in that the tensioning arm (51) has an inwardly directed rim which can form a snap connection cooperating with a rim (54) on an opening (54, 55) in the ring (49).

6. Clamping of tensioning ring according to claim 4 or 5, characterized in that the tensioning arm (51) has a flexible strip integral with it and adapted to pass non-extractably through aligned openings (69, 70, 71), in the tensioning arm (63), the side walls (66, 43, 44) of the connecting member and/or the ring.

7. Clamping or tensioning ring according to claim 1, 2, 3, 4, 5 or 6, characterized in that the hinge axes (9, 11) of the connections of the tensioning arm (4) to the ring (1) and of the connecting member (5) to the ring (1) lie in the plane of the base of the profile of the ring.

8. Clamping or tensioning ring according to claims 1, 2, 3, 4, 5, 6 or 7, characterized in that the hinge axis of the connection of the tensioning arm to the connecting member lies in the plane of the base (25) of the profile of the connecting member.

9. Clamping or tensioning ring according to claim 7 or 8, characterized in that the hinge consists of a lip (10) punched out on three sides at the site of an opening (7) punched out in the base of the profile of the ring or of the tensioning arm respectively, said lip (10) being folded over inwardly around a hinge pin (11) formed by punching out and pressing to shape in the end of the tensioning arm or the ends of the connecting member respectively.

10. Clamping or tensioning ring according to claim 9, characterized in that the edges (18, 18') of the opening (7) of the punched-out lip (10) are bent up, near said lip, at right angles to the hinge axis and are provided with an indented semicircular cavity (20, 21), the axis of which coincides with the hinge axis.

11. Clamping or tensioning ring, according to claim 8 or 9, characterized in that the hinge pin (9, 11) is formed by bending up in U-shape the end edge of the arm (4) or of the connecting member (5) respectively and the adjacent edge, extending parallel thereto, of the opening (24) punched in the arm or connecting member respectively.

12. Clamping or tensioning ring according to claim 1, 2, 3, 4, 5 or 6, characterized in that the hinge pin (58) of one or more of the hinge fastenings of the tensioning arm (51) to the ring (49), of the connecting member (57) to the ring (49), or of the connecting member (57) and the tensioning arm (51) is or are held in place by means of a U-shaped bow (60) which is placed with its legs astride the pin (58) and whose legs (61, 62), inserted through an opening (59) on each side of the pin (58), are folded flat in opposite direction against the inner wall of the part which is to be connected to the hinge pin.

13. Clamping or tensioning ring according to claims 1, 2, 3, 4, 5, 6, 7, 8, 9, 10, 11 or 12, characterized in that the ring has a flange (36) which is provided with lips (38, 39) punched out near the ends and bent outwards, and that the connecting member has a flange (37) which in the closed position lies against the flange (36) on the ring and has an opening (40) which falls over the lips.

14. Ring according to one of claims 1–13 inclusive, characterized in that the tensioning arm (77) is in the form of a box profile (78, 79).

**Patentansprüche**

1. Klemm- oder Spannring (1, 64) zur lösbaren Befestigung eines Deckels auf dem offenen Ende eines Behälters, bestehend aus einem im Querschnitt U- oder V-förmigen Profilabschnitt, der zu einem angenähert geschlossenen Ring gebogen ist, wobei sich die beiden Enden gegenüberliegen, und eine Spann- und Schließeinrichtung aufweist bestehend aus einem dicht an einem Ende (3) des Ringes (1, 64) angelenkten Spannarm (4) und aus einem Verbindungsstück (5), das mit seinem einen Ende an dem anderen Ende (2) des Ringes (1, 64) und mit seinem anderen Ende zwischen den Enden des Spannarmes (4) so angelenkt ist, daß dann, wenn der Spannarm (4) gegen den Ring (1, 64) angelegt ist, dieser Ring (1, 64) einen Kreis bildet, während das Verbindungsstück (5) die Enden (2, 3) des Ringes (1, 64) überbrückt, dadurch gekennzeichnet, daß das Verbindungsstück (5) mit Ausnahme der die Anlenkungen (11, 12) bildenden Teile ein Querschnittsprofil aufweist, das genau über die Außenkontur des Ringprofils paßt, insbesondere im Verbindungsbereich zwischen den Enden (2, 3) des Ringes (1, 64), und daß der Spannarm (4) zwischen seiner Anlenkung (12) am Verbindungsstück (5) und seinem freien Ende (17) ein Querschnittsprofil aufweist, das zumindest über eine Teillänge des Spannarmes (4) mit seinen Schenkeln genau über die Schenkel des Ringprofils (1, 64) passt, und daß die Profile des Spannarmes (4) und des Verbindungsstücks (5) im Bereich zwischen den Gelenken (9, 12) des Spannarmes (4) einander ergänzen.

2. Klemm- oder Spannring nach Anspruch 1, dadurch gekennzeichnet, daß die Seitenwandungen des Ringes beidseitig einer in ihm vorgesehenen Ausnehmung nach außen verbreitert sind und Seitenwangen (43, 44) bilden, die in Schließstellung an den Seitenwandungen des Spannarmes (4, 63) anliegen.

3. Klemm- oder Spannring nach Anspruch 2, dadurch gekennzeichnet, daß in Schließstellung die nach außen verbreiterten Seitenwangen (43, 44) des Ringes zwischen dem Spannarm (51, 63) und den Seitenwangen (56) des Verbindungsstückes (57, 66) liegen.

4. Klemm- oder Spannring nach Anspruch 1, 2 oder 3, dadurch gekennzeichnet, daß der Spannarm (51, 63) aus Kunststoff besteht.

5. Klemm- oder Spannring nach Anspruch 4, dadurch gekennzeichnet, daß der Spannarm (51) einen nach innen gerichteten Rand aufweist, der eine Schnappverbindung bilden und mit einem Rand (54) an einer Ausnehmung (54, 55) im Ring (49) zusammenwirken kann.

6. Klemm- oder Spannring nach Anspruch 4 oder 5, dadurch gekennzeichnet, daß der Spannarm (51) einen flexiblen, einteilig mit ihm ausgebildeten Streifen aufweist, der dazu bestimmt ist, nicht herausziehbar durch miteinander fluchtende Öffnungen (69, 70, 71) im Spannarm (63) und in den Seitenwandungen (66, 43, 44) des Verbindungsstückes und/oder des Ringes zu ragen.

7. Klemm- oder Spannring nach einem der vorhergehenden Ansprüche, dadurch gekennzeichnet, daß die Anlenkachsen (9, 11) der Verbindungen zwischen Spannarm (4) und Ring (1) sowie zwischen Verbindungsstück (5) und Ring (1) in der Basisebene des Ringprofils liegen.

8. Klemm- oder Spannring nach einem der vorhergehenden Ansprüche, dadurch gekennzeichnet, daß die Anlenkachse der Verbindung zwischen Spannarm und Verbindungsstück in der Ebene der Basis (25) des Verbindungsstückprofils liegt.

9. Klemm- oder Spannring nach Anspruch 7 oder 8, dadurch gekennzeichnet, daß die Anlenkung aus einer Lippe (10) besteht, die auf drei Seiten im Bereich einer aus der Profilbasis des Ringes bzw. des Spannarmes ausgestanzten Ausnehmung (7) ausgestanzt und nach innen über einen Gelenkzapfen (11) herumgebogen ist, der im Ende des Spannarmes bzw. in den Enden des Verbindungsstücks durch Ausstanzen und Formpressung gebildet ist.

10. Klemm- oder Spannring nach Anspruch 9, dadurch gekennzeichnet, daß die Ränder (18, 18') der Ausnehmungen (7) der ausgestanzten Lippe (10) nahe dieser Lippe rechtwinklig zur Gelenkachse hochgebogen und mit einer eingebuchteten, halbkreisförmigen Vertiefung (20, 21) versehen sind, deren Achse mit der Gelenkachse zusammenfällt.

11. Klemm- oder Spannring nach Anspruch 8 oder 9, dadurch gekennzeichnet, daß der Gelenkzapfen (9, 11) gebildet ist durch U-förmiges Hochbiegen des Endrandes des Spannarmes (4) bzw. des Verbindungsstücks (5) sowie des hierzu parallelen benachbarten Randes der in den Spannarm bzw. das Verbindungsstück gestanzten Ausnehmung (24).

12. Klemm- oder Spannring nach einem der Ansprüche 1 bis 6, dadurch gekennzeichnet, daß der Gelenkzapfen (58) zumindest eine Anlenkung des Spannarms (51) am Ring (49), des Verbindungsstücks (57) am Ring (49) oder des Verbindungsstücks (57) und des Spannarmes (51) in seiner Lage gehalten ist durch einen U-förmigen Bügel (60), der mit seinen Füßen rittlings auf dem Zapfen (58) plaziert ist, und dessen Füße (61, 62) beidseitig des Zapfens (58) durch je eine Ausnehmung (59) gesteckt und in entgegengesetzter Richtung flach gegen die innere Wandung des mit dem Gelenkzapfen zu verbindenden Teiles gebogen sind.

13. Klemm- oder Spannring nach einem der vorhergehenden Ansprüche, dadurch gekennzeichnet, daß der Ring einen Flansch (36) aufweist, aus dem nahe der Ringenden Zungen (38, 39) ausgestanzt und nach außen gebogen sind, und daß das Verbindungsstück einen Flansch (37) aufweist, der in Schließstellung am Flansch (36) des Ringes anliegt und mit einer Ausnehmung (40) die Zungen übergreift.

14. Klemm- oder Spannring nach einem der vorhergehenden Ansprüche, dadurch gekennzeichnet, daß der Spannarm (77) als Kastenprofil (78, 79) ausgebildet ist.

## Revendications

1. Anneau (1, 64) de serrage ou de mise en tension pour attacher de façon détachable un couvercle sur l'extrémité ouverte d'un corps de conteneur, ledit anneau consistant en une pièce de matériau profilé présentant un profil de coupe en forme de U ou en forme de V et qui est courbée sensiblement en un arc circulaire pratiquement fermé avec ses deux extrémités se faisant face l'une à l'autre, et sur lequel on dispose un mécanisme de mise en tension et de fermeture consistant en un bras (4) de mise en tension, qui est attaché par charnière près d'une extrémité (3) de l'anneau (1, 64) et d'un organe (5) de liaison qui est attaché à par charnière à une extrémité à l'autre extrémité (2) de l'anneau (1, 64) et à son autre extrémité au bras (4) de mise en tension en un point situé entre les extrémités de ce dernier, de telle manière que quand le bras (4) de mise en tension est placé contre l'anneau (1, 64), ledit anneau (1, 64) forme un cercle, alors que l'organe (5) de liaison forme un pont au-dessus des extrémités (2, 3) de l'anneau (1, 64), caractérisé en ce que l'organe (5) de liaison, à l'exception des parties formant les charnières (11, 12), possède un profil en section transversale qui s'ajuste avec précision sur la surface extérieure du profil de l'anneau, particulièrement à l'emplacement de la liaison des extrémités (2, 3) de l'anneau (1, 64) l'une avec l'autre, et en ce que le bras (4) de mise en tension possède, entre la liaison (12) à charnière à l'organe (5) de liaison et l'extrémité libre (17), un profil dont la section transversale, au moins sur une partie de la longueur du bras (4) de mise en tension, s'ajuste par ses pattes avec précision au-dessus des pattes du profil de l'anneau (1, 64,) et en ce que les profils du bras (4) de mise en tension et de l'organe (5) de liaison se complètent l'un l'autre dans la région située entre les charnières (9, 12) du bras (4).

2. Anneau de serrage ou de mise en tension selon la revendication 1, caractérisé en ce que les parois latérales de l'anneau s'étendent vers l'extérieur sur les deux côtés d'une ouverture qui y est disposée, et forment des joues latérales (43, 44) qui dans la position fermée reposent contre les parois latérales du bras (4, 63) de mise en tension.

3. Anneau de serrage ou de mise en tension selon la revendication 2, caractérisé en ce que dans la position fermée les joues latérales (43, 44) de l'anneau qui s'étendent vers l'extérieur reposent entre le bras (51, 63) de mise en tension et les joues latérales (56, 66) de l'organe (57, 66) de liaison.

4. Anneau de serrage ou de mise en tension selon la revendication 1, 2 ou 3, caractérisé en ce que le bras (51, 63) de mise en tension est réalisé en un matériau plastique.

5. Anneau de serrage ou de mise en tension selon la revendication 4, caractérisé en ce que le bras (51) de mise en tension possède un rebord dirigé vers l'intérieur qui peut réaliser une liaison par encliquetage, coopérant avec un rebord (54) prévu sur une ouverture (54, 55) dans l'anneau (49).

6. Anneau de serrage ou de mise en tension selon la revendication 4 ou 5, caractérisé en ce que le bras (51) de mise en tension possède une bande flexible d'un seul tenant avec lui-même, et apte à passer sans pouvoir en être extrait à travers des ouvertures alignées (69, 70, 71), dans le bras (63) de mise en tension, les parois latérales (66, 43, 44) de l'organe de liaison et/ou l'anneau.

7. Anneau de serrage ou de mise en tension selon la revendication 1, 2, 3, 4, 5 ou 6, caractérisé en ce que les axes (9, 11) de charnières des liaisons du bras (4) de mise en tension à l'anneau (1) et de l'organe (5) de liaison à l'anneau (1) reposent dans le même plan de la base du profil del'anneau.

8. Anneau de serrage ou de mise en tension sur les revendications 1, 2, 3, 4, 5, 6 ou 7, caractérisé en ce que l'axe de charnière de la liaison du bras de mise en tension à l'organe de liaison repose dans le plan de la base (25) du profil de l'organe de liaison.

9. Anneau de serrage ou de mise en tension selon la revendication 7 ou 8, caractérisé en ce que la charnière consiste en une lèvre (10) estampée sur trois côtés à l'emplacement d'une ouverture (7) estampée dans la base du profil de l'anneau ou du bras de mise en tension respectivement, ladite lèvre (10) étant repliée vers l'intérieur autour d'un ergot (11) de charnière formé par estampage et pressage en forme dans l'extrémité du bras de mise en tension ou les extrémités de l'organe de liaison respectivement.

10. Anneau de serrage ou de mise en tension selon la revendication 9, caractérisé en ce que les bords (18, 18') des ouvertures (7) de la lèvre (10) estampée sont recourbés, près de ladite lèvre, à des angles droits par rapport à l'axe de charnière, et comprennent une cavité semicirculaire indentée (20, 21), dont l'axe coïncide avec l'axe de la charnière.

11. Anneau de serrage ou de mise en tension selon la revendication 8 ou 9, caractérisé en ce que l'ergot de charnière (9, 11) est formé en recourbant en forme de U le bord extrême du bras (4) ou de l'organe (5) de liaison respectivement et le bord adjacent, qui s'étend parallèlement à celui-ci, de l'ouverture (24) estampée dans le bras ou l'organe de liaison respectivement.

12. Anneau de serrage ou de mise en tension selon la revendication 1, 2, 3, 4, 5 ou 6, caractérisé en ce que l'ergot (58) de charnière de l'une ou de plusieurs des fixations de charnière (51) de mise en tension sur l'anneau (49), de l'organe (57) de liaison à l'anneau (49), ou de l'organe (57) de liaison et du bras (51) de mise en tension est ou sont maintenus en place au moyen d'un arc (60) en forme de U, qui est placé avec ses pattes à cheval sur l'ergot (58), et dont les pattes (61, 62), insérées à travers une ouverture (59) sur chaque côté de l'ergot (58), sont repliées à plat dans la direction opposée contre la paroi intérieure de la partie qui doit être reliée à l'ergot de charnière.

13. Anneau de serrage ou de mise en tension selon la revendication 1, 2, 3, 4, 5, 6, 7, 8, 9, 10, 11 ou 12, caractérisé en ce que l'anneau possède une bride (36), qui comporte des lèvres (38, 39) estampées près des extrémités et courbées vers l'extérieur, et en ce que l'organe de liaison comporte une bride (37) qui, dans la position fermée, repose contre la bride (36) sur l'anneau, et comporte une ouverture (40) qui tombe entre les lèvres.

14. Anneau selon l'une des revendications 1 à 13 inclusivement, caractérisé en ce que le bras (77) de mise en tension a la forme d'un profil (78, 79) en forme de boîte.

fig-1

fig-2

fig-3

fig-5

fig-4

fig-6

fig-7

fig-8

fig-9

fig-19

fig-20

fig-11

fig-10

fig-12

EP 0 235 405 B1

fig-14

fig-15

fig-16

fig-17

fig-18

fig-13